# EUROPEAN PATENT SPECIFICATION

(11) **EP 2 557 612 B1**
(45) Date of publication and mention of the grant of the patent: **01.05.2019**
(21) Application number: 12178450.8
(22) Date of filing: 30.07.2012
(51) Int. Cl.: H01M 10/60

(54) **Battery module**
Batteriemodul
Module de batterie

(30) Priority: 09.08.2011 US 201161521512 P; 22.12.2011 US 201113335230
(43) Date of publication of application: 13.02.2013
(73) Proprietor: Samsung SDI Co., Ltd., Gyeonggi-do (KR); Robert Bosch GmbH, 70442 Stuttgart (DE)
(72) Inventor: Kim, Myung-Chul, Yongin-si (KR)
(74) Representative: Gulde & Partner

(56) References cited:
- US-A1- 2005 170 240
- US-A1- 2009 186 265
- US-A1- 2010 310 909

## Description

### BACKGROUND

### 1. Field of the Invention

Exemplary embodiments relate to a battery module, and more particularly, to a battery module including a plurality of battery cells and a barrier interposed between the battery cells.

### 2. Discussion of Related Art

Generally, a secondary battery is a battery which can be repeatedly used through charging and discharging. A secondary battery, which is formed of one battery cell, is used for portable small-sized electronic devices, such as a mobile phone, a notebook, a computer, a camera, a camcorder, and the like. Alternatively, a second battery, which is formed of a battery pack including a plurality of battery cells, is used as a motor driving power supply for a high-output hybrid electric vehicle (HEV), an electric vehicle (EV), and the like.

Such a battery module is used for a high-output motor driving power supply and generates a great amount of heat by charging and discharging operations, and such heat may deteriorate battery cells. Accordingly, there is a demand for a battery module having a structure of improving heat discharge property. US 2009/0186265 A1 discloses a battery cell assembly having a heat exchanger between first and second battery cells in order to avoid thermal degradation of the cells.

### SUMMARY OF THE INVENTION

An aspect of the present invention is to provide a battery module improving heat discharge property.

According to an aspect of the present invention, there is provided a battery module comprising: a plurality of battery cells being stacked along a first direction, at least one barrier adjoining at least one battery cell among the plurality of battery cells; the at least one barrier comprising: a first side member arranged at a side surface of the at least one battery cell, a second side member arranged at an opposite side surface of the at least one battery cell, and a plurality of connection members being separated from one another, each connection member extending from the first side member to the second side member, wherein a plurality of heat discharge channels extends between the first side member and the second side member, wherein one heat discharge channel among the plurality of heat discharge channels comprises an even part corresponding to a center part of the battery cell, a first slope part and a second slope part, wherein both slope parts are located in peripheral portions of the heat discharge channel, wherein at least one slope part is arranged in a central portion of one of the side members, and wherein a width of the even part is lower than a width of both slope parts.

Preferably, the even part extends over a portion of the heat discharge channel where the width of the heat discharge channel is minimal. Preferably, the even part is arranged symmetrically within the heat discharge channel. Preferably, a minimum distance of the even part to the first side member is equal to a minimum distance of the even part to the second side member.

Preferably both slope parts are formed as a tapered portion. Preferably the width of the slope parts gradually increases along a lengthwise direction.

Preferably the even part has a uniform (minimal) width.

Preferably a barrier is arranged between each pair of adjacent battery cells.

Preferably each of the first side member and the second side member comprises a plurality of openings which form end portion of a plurality of separate heat discharge channels extending between the first side member and the second side member. Preferably the connection members are connected to an internal side of the first side member at first connecting portions and to an internal side the second side member at second connecting portions, wherein the openings are formed in the first side member between adjacent first connecting portions and in the second side member between adjacent second connecting portions.

Preferably at least one connection member has a uniform width. Preferably all connection members have a uniform width. Preferably all connection members have the same width.

Preferably a minimum distance between an opening of the first side member (and/or second side member) and an upper side of the respective battery cells is equal to a minimum distance between an opening of the first side member (and/or second side member) and a lower side of the respective battery cells.

Preferably the slope part comprises a first tapered portion and a second tapered portion, wherein the first tapered portion narrows along a direction which is opposite to a direction in which the second tapered portion narrows. Preferably the first tapered portion has the same taper angle as the second tapered portion. Preferably first tapered portion has the same size as the second tapered portion.

Preferably the width of the plurality of heat discharge channels gradually increases along the at least one tapered portion.

Preferably each barrier comprises a first set of concurrent connection members and a second set of concurrent connection members. Preferably first set of concurrent connection members and the second set of concurrent connection members are arranged symmetrically along an axis which extends from a central portion of the first side member to a central portion of the second side member.

Preferably at least portions of adjacent connection members are arranged to form a tapered portion, wherein the tapered portion widens along a second direction which is different from the first direction.

Preferably each of the at least one heat discharge channels is formed as a closed pipe. That is, the each of the at least one heat discharge channels has (only) two openings, one being arranged in the first side member and the other one being arranged in the second side member.

Preferably the at least one tapered portion (more preferably all tapered portions) widens along a direction which is perpendicular to the first direction and parallel to a longitudinal axis (extending from an upper side of the battery cells to a lower side of the battery cells) of the first side member and/or second side member. Preferably the at least one tapered portion (more preferably all tapered portions) extends along a direction which is perpendicular to the first direction and perpendicular to a longitudinal axis (extending from an upper side of the battery cells to a lower side of the battery cells) of the first side member and/or second side member. Preferably the first side member and/or second side member are formed as a plate. Preferably the first side member is arranged parallel to the second side member.

Preferably the lateral area (also referred to as curved surface area which forms the pipe) of the at least one heat discharge channel (more preferably heat discharge channels) is (more preferably completely) formed by adjacent connection members and/or adjacent battery cells. Preferably upper and lower lateral area of the at least one heat discharge channel is completely formed by adjacent connection members. Preferably lateral area extending sidewise is completely formed by adjacent connection members.

According to another aspect of the present invention, there is provided a battery module including a plurality of battery cells arranged in one direction and a barrier interposed between the battery cells, wherein the barrier includes a plurality of linear members, a plurality of openings disposed between neighboring linear members, and a first side member and a second side member connected to one end and an opposite end of the linear members, respectively, and a center opening disposed on a center of the barrier among the openings has a slope part having a slope which becomes narrow or wide from the one end or the opposite end to the center.

The linear members may be sequentially provided on opposite sides based on the center opening and may have a uniform width.

The battery module may further include side openings which is formed in a space between the linear members formed on the opposite sides based on the center opening and has a uniform width.

The slope part may include a first slope part having a first slope which becomes narrow to the center from the one end and a second slope part having a second slope which becomes narrow to the center from the opposite end, wherein the first slope and the second slope may have the same size, and a first even part having a uniform width may be provided between the first slope part and the second slope part.

The slope part may include a third slope part having a third slope which becomes narrow to the center from the opposite end, and a second even part having a uniform width from the one end to the third slope part may be provided.

The slope may include a fourth slope part having a fourth slope which becomes wide from the one end to the opposite end.

Here, the slope part may be in a straight line or in a curved line.

The battery module may further include a third side member connecting an upper edge part of the first side member to an upper edge part of the second side member and a fourth side member connecting a lower edge part of the first side member to a lower edge part of the second side member.

When the barrier accommodates the battery cells on opposite sides of the barrier, the linear members may be connected to a first internal side or a second internal side on which the first side member and the second side member are in contact with the battery cells.

When the barrier accommodates the battery cells on one side of the barrier, the linear members may be connected to a lateral edge side or the first side member or a lateral edge side of the second side member.

The battery module may further include a housing accommodating the battery cells and the barrier.

The housing may include a pair of first and second end plates disposed outside the battery cells and a connecting member connecting the first and second end plates.

The connecting member may include side brackets connecting opposite lateral sides of the end plates and a bottom bracket connecting bottom sides of the end plates.

As described above, according to exemplary embodiments of the present invention, an opening is formed in a barrier corresponding to an area on which heat from battery cells is concentrated such that speed of a heat transfer medium increases, thereby effectively cooling the battery cells within a short time.

Accordingly, heat exchange efficiency of the battery cells is improved, so that a smaller amount of a heat transfer medium is needed, thereby reducing production costs.

Further, a battery pack has improved cooling efficiency, so that battery cells are not easily deteriorated by a plurality of times of charging and discharging.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a schematic perspective view of a battery module according to an exemplary embodiment of the present invention;
FIG. 2 is an exploded perspective view of the battery module of FIG. 1;
FIG. 3 is a perspective view of a barrier interposed between battery cells according to the embodiment;
FIG. 4A is a front view of a barrier according to a first embodiment of the present invention;
FIG. 4B is a front view of a barrier according to a second embodiment of the present invention;
FIG. 4C is a front view of a barrier according to a third embodiment of the present invention; and
FIG. 5 is a perspective view of a barrier according to a fourth embodiment of the present invention.

### DETAILED DESCRIPTION OF THE INVENTION

Reference will now be made in detail to exemplary embodiments of the present invention, examples of which are illustrated in the accompanying drawings. The embodiments are described below in order to explain the present invention by referring to the figures. This invention may, however, be embodied in many different forms and should not be construed as limited to the exemplary embodiments set forth herein. Rather, these embodiments are provided so that this disclosure will be thorough and complete, and will fully convey the scope of the invention to those skilled in the art. It will be understood that when an element or layer is referred to as being "on" or "connected to" another element or layer, the element or layer can be directly on the other element or layer, or the element or layer may be electrically connected to the other element or layer with intervening elements or layers being present. Also, description of unnecessary parts or elements may be omitted for clarity and conciseness, and like reference numerals refer to like elements throughout.

Hereinafter, the present invention will be described in detail with reference to the accompanying drawings.

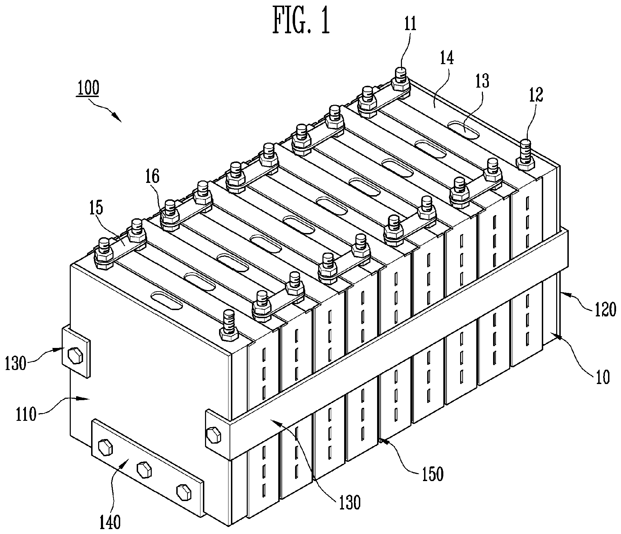

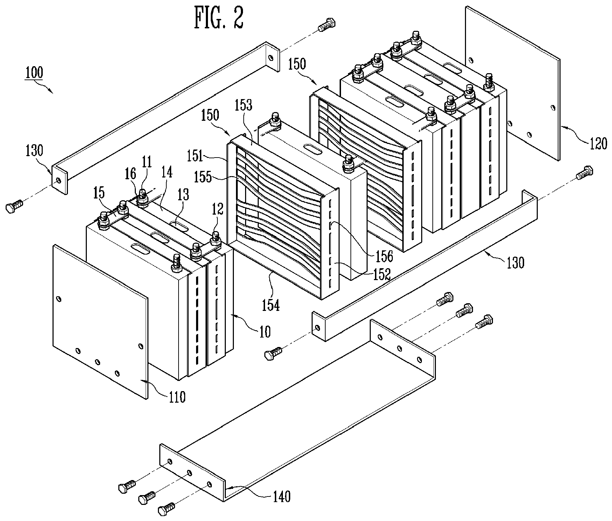

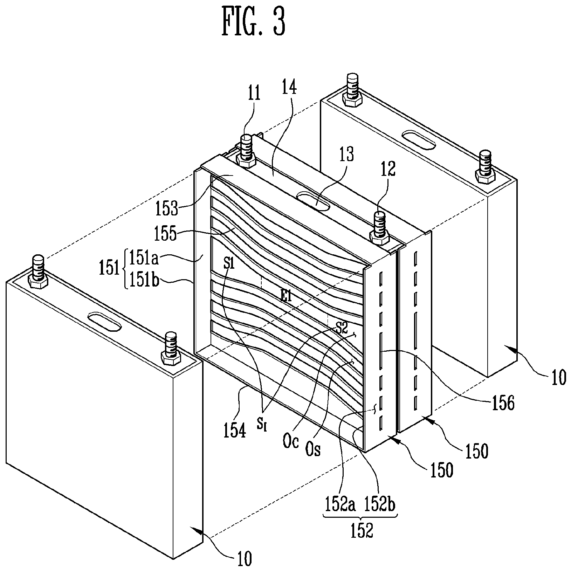

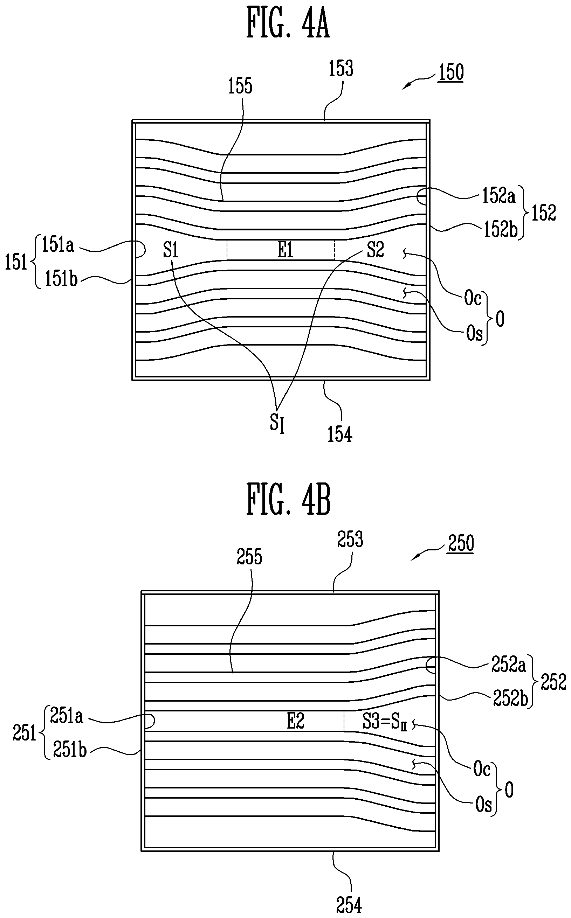

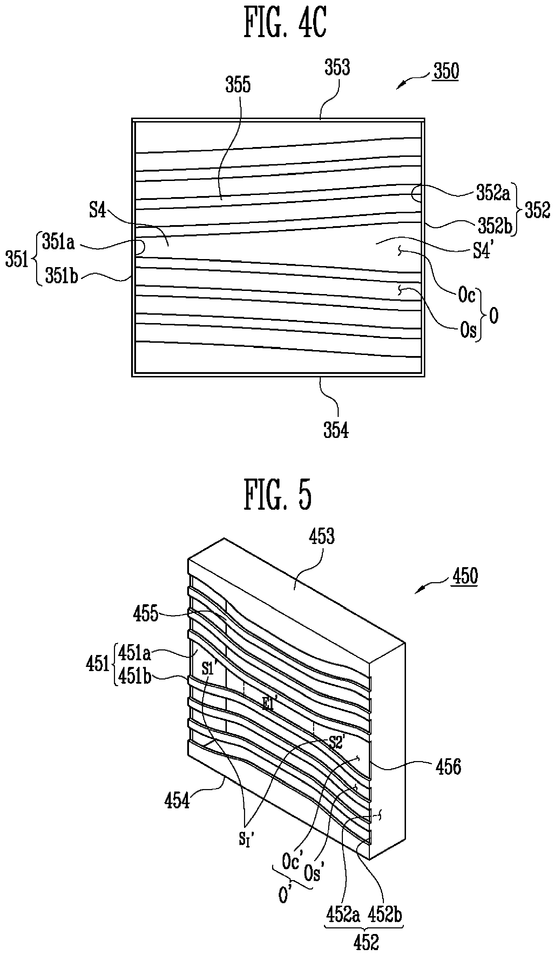

FIG. 1 is a schematic perspective view of a battery module according to an exemplary embodiment of the present invention, FIG. 2 is an exploded perspective view of the battery module of FIG. 1, FIG. 3 is a perspective view of a barrier interposed between battery cells according to the embodiment, FIG. 4A is a front view of a barrier according to a first embodiment of the present invention, FIG. 4B is a front view of a barrier according to a second embodiment of the present invention, FIG. 4C is a front view of a barrier according to a third embodiment of the present invention, and FIG. 5 is a perspective view of a barrier according to a fourth embodiment of the present invention.

Referring to FIGS. 1 to 4a, a battery module 100 according to the first embodiment of the present invention includes a plurality of battery cells 10 arranged in one direction and a barrier 150 interposed between the battery cells 10, wherein the barrier 150 includes a plurality of linear members 155, a plurality of openings O disposed between neighboring linear members 155, a first side member 151 and a second side member 152 connected to one end and an opposite end of the linear members 155, respectively, and a third side member 153 and a fourth side member 154 connecting the first side member 151 and the second side member 152 on upper and lower sides of the battery cells 10. Among the openings O, a center opening Oc disposed on a center of the barrier 150 has a slope part S_{I}.

The slope part S_{I} includes a first slope part S1 having a first slope which becomes narrow to the center from the one end at which the first side member 151 is disposed and a second slope part S2 having a second slope which becomes narrow to the center from the opposite end at which the second side member 152 is disposed.

Here, the first slope and the second slope have the same size, and a first even part E1 having a uniform width is provided between the first slope part S1 and the second slope part S2.

Meanwhile, the plurality of linear members 155 may be sequentially provided on opposite sides based on the center opening Oc and may have a uniform width. However, the linear members 155 may also be formed in various shapes depending on purposes.

Further, side openings Os are formed in a space between the plurality of linear members 155 formed on the opposite sides based on the center opening Oc, in which the side openings Os may have a uniform width but may be formed in various shapes depending on shapes of the linear members 155 and purposes. Here, the barrier 150 is disposed between neighboring battery cells 10 to accommodate the battery cells on opposite sides. In this case, the linear members 155 are connected to a first internal side 151a or a second internal side 152a on which the first side member 151 and the second side member 152 are in contact with the battery cells 10. The first external side of the first side member 151 is depicted by reference sign 151b and the second external side of the second side member 152 is depicted by reference sign 152b.

As described above, due to the barrier 150, the openings O (Oc and Os) may be disposed between the battery cells 10 and may function as a passage to discharge heat through so that heat generated from the battery cells 10 during a plurality of times of charging and discharging processes is not accumulated. Further, the openings O may be a passage for a heat transfer medium to cool or heat the battery cells 10. That is, the heat transfer medium is introduced at one side of the battery module 100, exchanges heat while passing through the openings O provided in the barrier 150 and coming in direct contact with a wider side of the battery cells 10, and is discharged to another side of the battery module 100, and accordingly the battery cells 100 maintain predetermined temperature.

Since the heat transfer medium, which is a fluid, increases in speed when flowing through a narrow passage and decreases in speed when flowing through a wide passage, the heat transfer medium has a higher speed in the first even part E1 than in the first slope part S1 and the second slope part S2, which may be applied to efficient cooling of the battery cells 10. For example, when heat discharged from the battery cells 10 is concentrated on a center part of the battery cells 10, speed of the heat transfer medium is higher in the first even part E1 corresponding to the center part of the battery cells 10 than in the first slope part S1 and the second slope part S2, thereby effectively cooling the battery cells 10 within a short time. Further, heat exchange efficiency of the battery cells 10 is improved, so that a smaller amount of a heat transfer medium is needed, thereby reducing production costs.

The battery cells 10 may be manufactured by accommodating an electrode assembly and an electrolyte in a battery case and sealing the battery case with a cap assembly 14. The cap assembly 14 may include a positive terminal 11, a negative terminal 12 which are provided on opposite end portions of the cap assembly 14, and a vent 13 disposed between the terminals 11 and 12. The electrode assembly may include a positive plate, a negative plate, and a separator disposed between the plates. The positive plate is connected to the positive terminal 11, and the negative plate is connected to the negative terminal 12, and accordingly energy generated by electrochemical reaction between the electrode assembly and the electrolyte is transmitted to the outside. Further, the vent 13 functions as a passage through which gas generated in the battery cell 10 is discharged to the outside.

A housing may fix the plurality of battery cells 10 and the barrier 150 to form the battery module 100. The housing may include a pair of first and second end plates 110 and 120 disposed outside the battery cells 10 and a connecting member connecting the first and second end plates 110 and 120.

The first and second end plates 110 and 120 and the connecting member form a space to accommodate the plurality of battery cells 10 in, and the battery cells 10 may be arranged in one direction in the formed space. Here, the battery cells 10 are arranged side by side, with wider front sides facing each other. The positive terminal 11 and the negative terminal 12 of two neighboring battery cells 10 may be electrically connected through a bus bar 15. The bus bar 15 includes holes through which the positive terminal 11 and the negative terminal 12 pass, and the bus bar 15 connected to the positive terminal 11 and the negative terminal 12 passing through the holes may be fixed by a nut 16 or the like.

The connecting member may include side brackets 130 supporting opposite lateral sides of the battery cells 10 and a bottom bracket 140 supporting a bottom side of the battery cells 10. A pair of side brackets 130 supports the opposite lateral sides of the battery cells 10, and the bottom bracket 140 supports the bottom side of the battery cells 10. One end portions of the side brackets 130 and the bottom bracket 140 are respectively coupled with the first end plate 110, and another end portions thereof are coupled with the second end plate 120, thereby connecting the first and second end plates 110 and 120 to each other. Here, coupling is made through a bolt and a nut, without being limited thereto.

The first and second end plates 110 and 120 are disposed to be in surface contact with opposite outermost battery cells 10 to press the plurality of battery cells 10 inwards. Here, the battery cells 10 supported by the first and second end plates 110 and 120 are arranged with the positive terminals 11 and the negative terminals 12 being alternately disposed, so that neighboring terminals are connected in series.

The first and second end plates 110 and 120, the pair of side brackets 130, and the bottom bracket 140 are provided to stably fix the battery cells 10 and may be modified variously, without being limited to a configuration in the present embodiment. Further, a connected structure and a number of battery cells 10 may be changed based on a design of the battery module 100.

Referring to FIG. 4B, the barrier 250 according to the second embodiment of the present invention includes a slope part S_{II} including a third slope part S3 having a third slope which becomes narrow to a center from one end at which a second side member 252 is disposed, and a second even part E2 having a uniform width from one end at which a first side member 251 is disposed to the third slope part S3.

In this case, the linear members 255 are connected to a first internal side 251a or a second internal side 252a on which the first side member 251 and the second side member 252 are in contact with the battery cells 10. The first external side of the first side member 251 is depicted by reference sign 251b and the second external side of the second side member 252 is depicted by reference sign 252b.

As in the first embodiment, a plurality of linear members 255 may be sequentially provided on opposite sides based on a center opening Oc and may have a uniform width. However, the linear members 255 may also be formed in various shapes depending on purposes.

Further, side openings Os are formed in a space between the plurality of linear members 255 formed on the opposite sides based on the center opening Oc, in which the side openings Os may have a uniform width but may be formed in various shapes depending on shapes of the linear members 255 and purposes.

Since a heat transfer medium, which is a fluid, increases in speed when flowing through a narrow passage and decreases in speed when flowing through a wide passage, the heat transfer medium has a higher speed in the second even part E2 than in the third slope part S3, which may be applied to efficient cooling of the battery cells 10.

Referring to FIG. 4C, the barrier 350 according to the third embodiment of the present invention includes a slope part including a fourth slope part S4, S4' having a fourth slope which becomes wide from one end S4 at which a first side member 351 is disposed to another end S4' at which a second side member 352 is disposed. In this case, the linear members 355 are connected to a first internal side 351a or a second internal side 352a on which the first side member 351 and the second side member 352 are in contact with the battery cells 10. The first external side of the first side member 351 is depicted by reference sign 351b and the second external side of the second side member 352 is depicted by reference sign 352b.

As in the first and second embodiments, a plurality of linear members 355 may be sequentially provided on opposite sides based on a center opening Oc and may have a uniform width. However, the linear members 355 may also be formed in various shapes depending on purposes.

Further, side openings Os are formed in a space between the plurality of linear members 355 formed on the opposite sides based on the center opening Oc, in which the side openings Os may have a uniform width but may be formed in various shapes depending on shapes of the linear members 355 and purposes.

Since a heat transfer medium, which is a fluid, increases in speed when flowing through a narrow passage and decreases in speed when flowing through a wide passage, speed of the heat transfer medium in the fourth slope part S4, S4' is higher in the one end S4 at which the first side member 351 is disposed than in the other end S4' at which the second side member 352 is disposed, which may be applied to efficient cooling of the battery cells 10.

As in the first to third embodiments, the slope parts S_{I}, S_{II}, and S₄-S4' may be formed in a curved line, but are not limited thereto. The slope parts S_{I}, S_{II}, and S₄-S4' may be formed in a straight line.
Referring to FIG. 5, unlike the barriers 150, 250, and 350 according to the first to third embodiments accommodating the battery cells 10 on the opposite sides of the barriers 150, 250, and 350, the barrier 450 according to the fourth embodiment of the present invention may accommodate a battery cell 10 on one side of the barrier 450. In this case, a linear member 455 is connected to a first lateral edge side 451b (which is an edge portion of the first external side) of a first side member 451 or a second lateral edge side 452b (which is an edge portion of the second external side) of a second side member 452. The first internal side of the first side member 451 is depicted by reference sign 451a and the second internal side of the second side member 452 is depicted by reference sign 452a.

Among a plurality of openings O', a center opening Oc' disposed on a center of the barrier 450 has a slope part S_{I}'.

The slope part S_{I}' includes a first slope part S1 having a first slope which becomes narrow to the center from one end at which the first side member 451 is disposed and a second slope part S2' having a second slope which becomes narrow to the center from an opposite end at which the second side member 452 is disposed.

Here, the first slope and the second slope have the same size, and a first even part E1' having a uniform width is provided between the first slope part S1' and the second slope part S2'.

Meanwhile, a plurality of linear members 455 may be sequentially provided on opposite sides based on the center opening Oc' and may have a uniform width. However, the linear members 455 may also be formed in various shapes depending on purposes.

Further, side openings Os' are formed in a space between the plurality of linear members 455 formed on the opposite sides based on the center opening Oc', in which the side openings Os' may have a uniform width but may be formed in various shapes depending on shapes of the linear members 455 and purposes.

Since a heat transfer medium, which is a fluid, increases in speed when flowing through a narrow passage and decreases in speed when flowing through a wide passage, the heat transfer medium has a higher speed in the first even part El' than in the first slope part S1' and the second slope part S2', which may be applied to efficient cooling of the battery cell 10.

In the first to fourth embodiments, the linear members 155, 255, 355, and 455 may be formed so as not to seal the vent 13, which is a discharge passage of gas from the plurality of battery cells 10. The vent 13 functions as a discharge passage of gas from the battery cells 10 when pressure of gas generated in the battery cells 10 is a predetermined level or more, thereby preventing damage of the battery cells 10 due to internal pressure.

In the first to fourth embodiments, heat discharged from the battery cells 10 is concentrated on the center part of the battery cells 10, but the present invention is not limited thereto. According to exemplary embodiments of the present invention, a battery module may be designed such that speed of a heat transfer medium becomes high in an area on which heat discharged from the battery cells 10 is concentrated.

According to exemplary embodiments of the present invention, an opening is formed in a barrier corresponding to an area on which heat from battery cells is concentrated such that speed of a heat transfer medium increases, thereby effectively cooling the battery cells within a short time.

Accordingly, heat exchange efficiency of the battery cells is improved, so that a smaller amount of a heat transfer medium is needed, thereby reducing production costs.

## Claims

1. A battery module (100) comprising:
a plurality of battery cells (10) being stacked along a first direction,
at least one barrier (150, 250, 350, 450) adjoining at least one battery cell (10) among the plurality of battery cells (10);
the at least one barrier (150, 250, 350, 450) comprising:
a first side member (151, 251, 351, 451) arranged at a side surface of the at least one battery cell (10),
a second side member (152, 252, 352, 452) arranged at an opposite side surface of the at least one battery cell (10), and
a plurality of connection members (155, 255, 355, 455) being separated from one another, each connection member (155, 255, 355, 455) extending from the first side member (151, 251, 351, 451) to the second side member (152, 252, 352, 452),
**characterized in that**
a plurality of heat discharge channels extends between the first side member (151, 251, 351, 451) and the second side member (152, 252, 352, 452), wherein one discharge channel among the plurality of heat discharge channels comprises an even part (E1, E1') corresponding to a center part of the battery cell, a first slope part (S1, S1') and a second slope part (S2, S2'), wherein both slope parts (S1, S2, S1', S2') are located in peripheral portions of the heat discharge channel, wherein at least one slope part (S1, S2, S1', S2') is arranged in a central portion of one of the side members (151, 451; 152, 252, 352, 452), and wherein a width of the even part (E1, E1') is lower than a width of the both slope parts (S1, S2, S1', S2').

2. The battery module (100) of claim 1, wherein the even part (E1, E1') is located in a central portion of the at least one heat discharge channel.

3. The battery module (100) according to any one of the preceding claims, wherein a barrier (150, 450) is arranged between each pair of adjacent battery cells (10).

4. The battery module (100) according to any one of the preceding claims, wherein each of the first side member (151, 451) and the second side member (152, 452) comprises a plurality of openings to form a plurality of separate heat discharge channels extending between the first side member (151, 451) and the second side member (152, 452).

5. The battery module (100) of claim 4, wherein the connection members (155, 455) are connected to an internal side (151a, 451a) of the first side member (151, 451) at first connecting portions and to an internal side (152a, 452a) the second side member (152, 452) at second connecting portions, wherein the openings are formed in the first side member (151, 451) between adjacent first connecting portions and in the second side member (152, 452) between adjacent second connecting portions.

6. The battery module (100) according to any one of the preceding claims, wherein the connection members (155, 455) have a uniform width.

7. The battery module (100) according to any one of the preceding claims, wherein the first slope part (S1, S1') has the same taper angle as the CL second slope part (S2, S2') and/or the first slope part (S1, S1') has the same size as the second slope part (S2, S2').

8. The battery module (100) according to any one of the preceding claims, wherein each barrier (150, 250, 350, 450) comprises a first set of concurrent connection members (155, 455) and a second set of concurrent connection members (155, 455).

## Patentansprüche

1. Ein Batteriemodul (100), aufweisend:
eine Vielzahl von Batteriezellen (10), die entlang einer ersten Richtung gestapelt sind,
zumindest eine Barriere (150, 250, 350, 450), die zumindest an eine Batteriezelle (10) aus der Vielzahl der Batteriezellen (10) angrenzt;
wobei die zumindest eine Barriere (150, 250, 350, 450) aufweist:
ein erstes Seitenelement (151, 251, 351, 451), das an einer Seitenfläche der zumindest einen Batteriezelle (10) angeordnet ist, und
ein zweites Seitenelement (152, 252, 352, 452), das an einer gegenüberliegenden Seitenfläche der zumindest einen Batteriezelle (10) angeordnet ist, und
eine Vielzahl von Verbindungselementen (155, 255, 355, 455), die voneinander getrennt sind, wobei sich jedes Verbindungselement (155, 255, 355, 455) vom ersten Seitenelement (151, 251, 351, 451) zum zweiten Seitenelement (152, 252, 352, 452) erstreckt,
**dadurch gekennzeichnet, dass**
eine Vielzahl von Wärmeabfuhrkanälen zwischen dem ersten Seitenelement (151, 251, 351, 451) und dem zweiten Seitenelement (152, 252, 352, 452) verläuft, wobei ein Abfuhrkanal aus der Vielzahl der Wärmeabfuhrkanäle einen ebenen Teil (E1, E1'), der einem mittleren Teil der Batteriezelle entspricht, einen ersten Neigungsteil (S1, S1') und einen zweiten Neigungsteil (S2, S2') aufweist, wobei sich beide Neigungsteile (S1, S2, S1', S2') in Umfangsabschnitten des Wärmeabfuhrkanals befinden, wobei zumindest ein Neigungsteil (S1, S2, S1', S2') in einem mittleren Abschnitt eines der Seitenelemente (151, 451; 152, 252, 352, 452) angeordnet ist und wobei eine Breite des ebenen Teils (E1, E1') niedriger als eine Breite beider Neigungsteile (S1, S2, S1', S2') ist.

2. Das Batteriemodul (100) nach Anspruch 1, wobei sich der ebene Teil (E1, E1') in einem mittleren Abschnitt des zumindest einen Wärmeabfuhrkanals befindet.

3. Das Batteriemodul (100) nach einem der vorhergehenden Ansprüche, wobei eine Barriere (150, 450) zwischen jedem Paar benachbarter Batteriezellen (10) angeordnet ist.

4. Das Batteriemodul (100) nach einem der vorhergehenden Ansprüche, wobei jedes des ersten Seitenelements (151, 451) und des zweiten Seitenelements (152, 452) eine Vielzahl von Öffnungen aufweist, um eine Vielzahl separater Wärmeabfuhrkanäle, die zwischen dem ersten Seitenelement (151, 451) und dem zweiten Seitenelement (152, 452) verlaufen, auszubilden.

5. Das Batteriemodul (100) nach Anspruch 4, wobei die Verbindungselemente (155, 455) an ersten Verbindungsabschnitten mit einer Innenseite (151a, 451a) des ersten Seitenelements (151, 451) und an zweiten Verbindungsabschnitten mit einer Innenseite (152a, 452a) des zweiten Seitenelements (152, 452) verbunden sind, wobei die Öffnungen im ersten Seitenelement (151, 451) zwischen benachbarten ersten Verbindungsabschnitten und im zweiten Seitenelement (152, 452) zwischen benachbarten zweiten Verbindungsabschnitten ausgebildet sind.

6. Das Batteriemodul (100) nach einem der vorhergehenden Ansprüche, wobei die Verbindungselemente (155, 455) eine gleichmäßige Breite aufweisen.

7. Das Batteriemodul (100) nach einem der vorhergehenden Ansprüche, wobei der erste Neigungsteil (S1, S1') denselben Kegelwinkel wie der CL zweite Neigungsteil (S2, S2') aufweist und/oder der erste Neigungsteil (S1, S1') dieselbe Größe wie der zweite Neigungsteil (S2, S2') aufweist.

8. Das Batteriemodul (100) nach einem der vorhergehenden Ansprüche, wobei jede Barriere (150, 250, 350, 450) einen ersten Satz übereinstimmender Verbindungselemente (155, 455) und einen zweiten Satz übereinstimmender Verbindungselemente (155, 455) aufweist.

## Revendications

1. Module de batterie (100) comprenant :
une pluralité de cellules de batterie (10) empilées le long d'une première direction,
au moins une barrière (150, 250, 350, 450) contiguë à au moins une cellule de batterie (10) parmi la pluralité de cellules de batterie (10) ;
ladite au moins une barrière (150, 250, 350, 450) comprenant :
un premier élément latéral (151, 251, 351, 451) agencé au niveau d'une surface latérale de ladite au moins une cellule de batterie (10),
un deuxième élément latéral (152, 252, 352, 452) agencé au niveau d'une surface latérale opposée de ladite au moins une cellule de batterie (10), et
une pluralité d'éléments de liaison (155, 255, 355, 455) séparés les uns des autres, chaque élément de liaison (155, 255, 355, 455) s'étendant du premier élément latéral (151, 251, 351, 451) au deuxième élément latéral (152, 252, 352, 452),
**caractérisé en ce que**
une pluralité de canaux d'évacuation de chaleur s'étendent entre le premier élément latéral (151, 251, 351, 451) et le deuxième élément latéral (152, 252, 352, 452), dans lequel un canal d'évacuation parmi la pluralité de canaux d'évacuation de chaleur comprend une partie plate (E1, E1') correspondant à une partie centrale de la cellule de batterie, une première partie de pente (S1, S1') et une deuxième partie de pente (S2, S2'), dans lequel les deux parties de pente (S1, S2, S1', S2') sont situées dans des parties périphériques du canal d'évacuation de chaleur, dans lequel au moins une partie de pente (S1, S2, S1', S2') est agencée dans une partie centrale de l'un des éléments latéraux (151, 451 ; 152, 252, 352, 452), et dans lequel une largeur de la partie plate (E1, E1') est inférieure à une largeur des deux parties de pente (S1, S2, S1', S2').

2. Module de batterie (100) selon la revendication 1, dans lequel la partie plate (E1, E1') est située dans une partie centrale dudit au moins un canal d'évacuation de chaleur.

3. Module de batterie (100) selon l'une quelconque des revendications précédentes, dans lequel une barrière (150, 450) est agencée entre chaque paire de cellules de batterie (10) adjacentes.

4. Module de batterie (100) selon l'une quelconque des revendications précédentes, dans lequel chacun du premier élément latéral (151, 451) et du deuxième élément latéral (152, 452) comprend une pluralité d'ouvertures pour former une pluralité de canaux d'évacuation de chaleur séparés s'étendant entre le premier élément latéral (151, 451) et le deuxième élément latéral (152, 452).

5. Module de batterie (100) selon la revendication 4, dans lequel les éléments de liaison (155, 455) sont reliés à un côté interne (151a, 451a) du premier élément latéral (151, 451) au niveau de premières parties de liaison et à un côté interne (152a, 452a) du deuxième élément latéral (152, 452) au niveau de deuxièmes parties de liaison, dans lequel les ouvertures sont formées dans le premier élément latéral (151, 451) entre les premières parties de liaison adjacentes et dans le deuxième élément latéral (152, 452) entre les deuxièmes parties de liaison adjacentes.

6. Module de batterie (100) selon l'une quelconque des revendications précédentes, dans lequel les éléments de liaison (155, 455) ont une largeur uniforme.

7. Module de batterie (100) selon l'une quelconque des revendications précédentes, dans lequel la première partie de pente (S1, S1') a le même angle de cône que la deuxième partie de pente (S2, S2') et/ou la première partie de pente (S1, S1') a la même taille que la deuxième partie de pente (S2, S2').

8. Module de batterie (100) selon l'une quelconque des revendications précédentes, dans lequel chaque barrière (150, 250, 350, 450) comprend un premier ensemble d'éléments de liaison simultanée (155, 455) et un deuxième ensemble d'éléments de liaison simultanée (155, 455).
